# EUROPÄISCHE PATENTSCHRIFT

(11) **EP 3 590 393 B1**
(45) Veröffentlichungstag und Bekanntmachung des Hinweises auf die Patenterteilung: **14.02.2024**
(21) Anmeldenummer: 19183754.1
(22) Anmeldetag: 02.07.2019
(51) Int. Cl.: A47J 27/00, A47J 36/32, A47J 43/07

(54) **VERFAHREN ZUR DIGITALISIERUNG EINES KOCHPROZESSES, KÜCHENGERÄT SOWIE SYSTEM ZUR DIGITALISIERUNG EINES KOCHPROZESSES**
METHOD FOR DIGITIZING A COOKING PROCESS, KITCHEN APPLIANCE AND SYSTEM FOR DIGITIZING A COOKING PROCESS
PROCÉDÉ DE NUMÉRISATION D'UN PROCESSUS DE CUISSON, APPAREIL DE CUISINE AINSI QUE SYSTÈME DE NUMÉRISATION D'UN PROCESSUS DE CUISSON

(30) Priorität: 02.07.2018 DE 102018115988
(43) Veröffentlichungstag der Anmeldung: 08.01.2020
(73) Patentinhaber: Vorwerk & Co. Interholding GmbH, 42270 Wuppertal (DE)
(72) Erfinder: Kemker, Uwe, 42105 Wuppertal (DE); Lichau, Christian, 44625 Herne (DE); Werhahn, Sarah, 8038 Zürich (AT); Isenberg, Gerhard, 50668 Köln (DE)
(74) Vertreter: Bals & Vogel Patentanwälte PartGmbB

(56) Entgegenhaltungen:
- DE-A1-102016 110 715
- DE-A1-102016 219 972

## Beschreibung

Die Erfindung betrifft ein Verfahren zur Digitalisierung eines Kochprozesses bei einem Küchengerät, ein Küchengerät zum Durchführen eines Kochprozesses gemäß dem Oberbegriff des unabhängigen Anspruchs 10 sowie ein System zur Digitalisierung eines Kochprozesses gemäß dem Oberbegriff des unabhängigen Anspruchs 11.

Es ist aus dem Stand der Technik bekannt, elektrische Küchengeräte zur automatischen Verarbeitung von Nahrungsmitteln nach vorbestimmten Rezeptparametern zu verwenden. Derartige elektrische Küchengeräte ermöglichen neben einem mechanischen Verarbeiten von Lebensmitteln, zum Beispiel mittels eines Rührwerks und/oder eines Schneidmessers, häufig auch ein Garen der Zutaten. Dazu sind vorbestimmte Rezepte vorgesehen, um einem Benutzer in möglichst komfortabler Art und Weise ein reproduzierbares Kochergebnis zu ermöglichen. Die Rezepte sind dabei häufig in einem mit dem Küchengerät verbundenen Speicher abgelegt und umfassen neben Anweisungen an den Benutzer auch Soll-Vorgaben für das Küchengerät, wie beispielsweise das Erhitzen der Zutaten auf eine bestimmte Temperatur.

Dabei ist es im Sinne der Anbieter derartiger elektrischer Küchengeräte dafür zu sorgen, dass die Rezepte eine hohe Qualität haben und somit dem Benutzer ein positives, reproduzierbares Kochergebnis ermöglichen. Dazu ist es bekannt, dass Rezepte durch die Anbieter selbst erstellt werden und dem Benutzer vorgegeben werden. Somit kann in einer professionellen Umgebung sichergestellt werden, dass Betriebsparameter für das Küchengerät korrekt gewählt werden und Zutaten sorgsam ausgewählt werden.

Viele Rezepte befinden sich jedoch im Besitz einzelner Personen oder im Familienbesitz und werden von Generation zu Generation weitergegeben. Daher ist es wünschenswert, einem Benutzer eines derartigen Küchengerätes es zu ermöglichen, auch solche, insbesondere im Familienbesitz befindliche Rezepte, auf dem Küchengerät durchzuführen und möglichst komfortabel in den automatischen Kochprozess einzubinden und/oder zur späteren Wiederholung des Rezeptes zu digitalisieren. Insbesondere auch durch die wachsende Anzahl von Online-Communities ist es ferner von Interesse, dass ein Benutzer auch individuell bekannte Rezepte mit einer größeren Anzahl von Leuten teilen kann. Die DE 10 2016 110 715 A1 zeigt ein Verfahren zum Betreiben einer Küchenmaschine, bei dem eine Ermittlung und/oder Festlegung der optimalen Ansteuerungsparameter für das jeweilige Lebensmittel in Bezug auf den Zustand und/oder die Art des Lebensmittels verbessert werden soll. Dabei müssen jedoch Informationen über ein verwendetes Lebensmittel manuell eingegeben werden. Die DE 10 2016 219 972 A1 offenbart ein Verfahren zur automatisierten Überwachung eines Herstellprozesses einer Nahrungsmittel-Masse.

Es ist somit eine Aufgabe der vorliegenden Erfindung, voranstehende aus dem Stand der Technik bekannte Nachteile zumindest teilweise zu beheben. Insbesondere ist es eine Aufgabe der vorliegenden Erfindung, eine Digitalisierung von Kochprozessen zu vereinfachen, sodass ein Benutzer eines Küchengerätes dies in möglichst einfacher und zuverlässiger Art und Weise durchführen kann.

Die Aufgabe wird gelöst durch ein Verfahren mit den Merkmalen des unabhängigen Anspruchs 1, ein Küchengerät mit den Merkmalen des unabhängigen Anspruchs 10 sowie ein System mit den Merkmalen des unabhängigen Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben worden sind, selbstverständlich auch im Zusammenhang mit dem erfindungsgemäßen Küchengerät sowie dem erfindungsgemäßen System und jeweils umgekehrt, sodass bezüglich der Offenbarung zu den einzelnen Erfindungsaspekten stets wechselseitig Bezug genommen wird bzw. werden kann.

Erfindungsgemäß umfasst das Verfahren zur Digitalisierung eines Kochprozesses bei einem Küchengerät die folgenden Schritte:
- Erfassen zumindest eines Betriebsparameters des Küchengerätes bei einer manuellen Benutzerinteraktion zur Verarbeitung einer im Küchengerät aufgenommenen Zutat,
- Identifizieren der Zutat durch Interpretieren zumindest des Betriebsparameters und der manuellen Benutzerinteraktion.

Insbesondere ist zumindest während des Erfassens des zumindest einen Betriebsparameters des Küchengerätes eine Zutat im Küchengerät aufgenommen. Dazu kann die Zutat beispielsweise in einem Kochgefäß des Küchengerätes aufgenommen sein. Insbesondere erfolgt daher vor dem Erfassen eine Aufnahme der Zutaten für den Kochprozess durch das Küchengerät. Das Küchengerät kann vorzugsweise eine Küchenmaschine zum zumindest teilweise automatischen Abarbeiten von Rezepten sein. Zur Erfassung des Betriebsparameters kann das Küchengerät vorzugsweise eine Sensorvorrichtung umfassen.

Unter dem zumindest einen Betriebsparameter kann vorzugsweise ein Messwert, insbesondere der Sensorvorrichtung, verstanden werden, durch welchen auf eine bestimmte Eigenschaft der Zutat geschlossen werden kann. Es ist beispielsweise denkbar, dass der zumindest eine Betriebsparameter zumindest eine der folgenden Messgrößen umfasst:
- Gewicht, insbesondere Gewichtsverteilung,
- Energiezufuhr, insbesondere Stromstärke und/oder Spannungsstärke,
- Temperatur, insbesondere Temperaturverteilung, im Kochgefäß und/oder der Zutat,
- visuelle Erscheinung der Zutat, insbesondere Farbgebung.

Das Erfassen bei der manuellen Benutzerinteraktion kann insbesondere derart verstanden werden, dass der Betriebsparameter infolge oder während der manuellen Benutzerinteraktion aufgezeichnet wird und vorzugsweise mit der manuellen Benutzerinteraktion in Korrelation gebracht wird. Vorzugsweise können mehrere Betriebsparameter beim Interpretieren genutzt werden, um die Zutat zu identifizieren. Insbesondere kann das Interpretieren ein Bewerten und/oder Einschätzen des zumindest einen Betriebsparameters und der manuellen Benutzerinteraktion umfassen. Vorzugsweise kann das Interpretieren auch als Evaluieren bezeichnet werden. Insbesondere bildet der zumindest eine Betriebsparameter in Kombination mit der manuellen Benutzerinteraktion ein Charakteristikum, durch welches auf die Zutat geschlossen werden kann. So ist es beispielsweise denkbar, dass über die Energiezufuhr zum Rührwerk des Küchengerätes ein Widerstand der Zutat gegenüber dem Durchmischen und/oder Zerkleinern gemessen wird und mit dem Gewicht der Zutat auf eine bestimmte Zutat schließen lässt. Ferner ist es denkbar, dass die Temperatur in Verbindung mit der Farbgebung der Zutat, insbesondere zu einem bestimmten Zeitpunkt im Kochprozess zu einer Erkennung der Zutat führen kann. Die manuelle Benutzerinteraktion kann vorzugsweise den Start eines Heizvorgangs, den Start eines Schneid- und/oder Rührvorgangs und/oder dergleichen umfassen. Insbesondere kann die Benutzerinteraktion eine oder mehrere manuelle Teilinteraktionen und/oder eine oder mehrere manuelle Einstellungen umfassen. Unter der manuellen Benutzerinteraktion kann somit das Auslösen einer bestimmten Funktion durch den Benutzer verstanden werden. Die manuelle Benutzerinteraktion kann dabei vorzugsweise eine Sollwertvorgabe umfassen, welche beispielsweise eine Soll-Temperatur, eine Soll-Umgebungsgeschwindigkeit und/oder eine Drehrichtung des Rührwerks vorgeben kann. Somit kann beispielsweise die Vorgabe eines bestimmten Heizwertes in Kombination mit einer bestimmten Drehgeschwindigkeit des Rührwerkes ein erstes Indiz für die Verwendung einer bestimmten Zutat sein. Wird schließlich noch zumindest ein Betriebsparameter hinzugezogen, kann dies bereits zu einer hohen Zuverlässigkeit bei der Erkennung der Zutaten führen. Das Identifizieren der Zutat kann ferner vorteilhafterweise ein Zuordnen der Zutat zu einem Textelement umfassen. Dadurch kann das Textelement in einer dem Benutzer verständlichen Art und Weise dargestellt werden und/oder als Zeichenkette zur Verfügung stehen. Insbesondere kann das Identifizieren der Zutat somit auch als Erkennen der Zutat, vorzugsweise anhand bekannter Daten, bezeichnet werden.

Somit ist ein Verfahren zur Digitalisierung eines Kochprozesses bereitgestellt, welches dem Nutzer in komfortabler Art und Weise eine automatische Erkennung verwendeten der Zutaten ermöglicht, insbesondere ohne dass eine manuelle Eingabe der Zutaten zur Integration in digitale Rezeptdaten notwendig ist. Dies spart dem Benutzer zum einen Zeit bei der Digitalisierung des Rezeptes. Zum anderen können dadurch Fehleingaben vermieden werden, sodass eine hohe Zuverlässigkeit bei der Erkennung der Zutaten bzw. der Rezeptschritte gegeben sein kann.

Vorzugsweise kann bei einem erfindungsgemäßen Verfahren das Erfassen des zumindest einen Betriebsparameters ein Aufzeichnen eines zeitlichen Verlauf des zumindest einen Betriebsparameters umfassen. Der zeitliche Verlauf des zumindest einen Betriebsparameters kann beispielsweise eine Heizkurve, eine Motorstromkurve und/oder eine Gewichtsverteilung während eines Rührvorgangs umfassen. Der zeitliche Verlauf kann somit ein spezielles Charakteristikum der Zutat sein, welches entsprechend durch eine Sensorvorrichtung detektiert werden kann. Insbesondere kann durch den zeitlichen Verlauf auch die manuelle Benutzerinteraktion abgebildet sein, indem ein Soll-Parameter, wie z.B. eine vorgegebene Soll-Zeit einer Erwärmung in den zeitlichen Verlauf eingehen kann bzw. aus diesem erkennbar sein kann. Durch den zeitlichen Verlauf kann der zumindest eine Betriebsparameter somit eine weitere Dimension erhalten, durch welche die Zuverlässigkeit bei der Erkennung der Zutat gesteigert sein kann. Darüber hinaus kann der zeitliche Verlauf zur Reproduktion des Kochprozesses in besonders einfacher Art und Weise eingesetzt werden. Dabei ist es denkbar, dass der zumindest eine Betriebsparameter, beispielsweise eine Temperaturentwicklungskurve über die Zeit, durch einen Regelkreis nachbildbar ist, sodass im Ergebnis die Zutat reproduzierbar in den entsprechenden Zustand bringbar ist.

Ferner kann bei einem erfindungsgemäßen Verfahren das Interpretieren zum Identifizieren der Zutat einen Abgleich zumindest des Betriebsparameters und/oder der manuellen Benutzerinteraktion mit einer Referenzdatenbank umfassen. Die Referenzdatenbank kann beispielsweise auf einem Server oder einer Speichereinheit des Küchengerätes bereitgestellt sein. Der Abgleich des zumindest einen Betriebsparameters und der manuellen Benutzerinteraktion mit der Referenzdatenbank umfasst vorzugsweise eine Suche identischer oder ähnlicher Referenzdatensätze, die insbesondere Referenzparameter und/oder Referenzinteraktionen, umfassen können, in der Referenzdatenbank. Ist eine ausreichende Ähnlichkeit oder sogar Identität aufgefunden, kann mit einer hohen Sicherheit auf eine bestimmte Zutat geschlossen werden. Die Referenzdatenbank umfasst somit vorzugsweise Einträge bekannter Zutaten und Benutzerinteraktionen. Insbesondere ist dadurch eine Interpretation zum Identifizieren der Zutat basierend auf zuvor ermittelten und/oder angelernten Daten möglich.

Im Rahmen der Erfindung ist vorgesehen, dass die manuelle Benutzerinteraktion einer Handlungssequenz des Kochprozesses zugeordnet wird, wobei die Interpretation zum Identifizieren der Zutat auf Basis der Handlungssequenz durchgeführt wird. Die Handlungssequenz umfasst eine bestimmte Abfolge von Benutzerinteraktionen. Ferner kann die Handlungssequenz zeitliche Verläufe des zumindest einen Betriebsparameters oder unterschiedlicher Betriebsparameter aufweisen. Somit kann ferner der zumindest eine Betriebsparameter der Handlungssequenz zugeordnet werden. Die Handlungssequenz stellt somit vorzugsweise einen Abschnitt innerhalb des Kochprozesses dar, wobei vorzugsweise mehrere Handlungssequenzen den Kochprozess abbilden. Für einfache Rezepte kann jedoch auch eine einzelne Handlungssequenz den gesamten Kochprozess bilden. Wird die Interpretation zum Identifizieren der Zutat auf Basis der Handlungssequenz durchgeführt, kann die Handlungssequenz ein Ablaufmuster darstellen, welches, beispielsweise in der Referenzdatenbank, in identischer oder ähnlicher Art und Weise aufgefunden werden kann. Über die Referenzdatenbank kann daraufhin aus der Handlungssequenz auf die Zutat geschlossen werden. Somit kann auch die Handlungssequenz dazu führen, dass die Zutat, insbesondere indirekt, erkannt wird. Auch zeitliche Position der Handlungssequenz im Kochprozess kann ein Charakteristikum der Handlungssequenz darstellen, anhand dessen die Referenzdatenbank durchsucht wird. Vorzugsweise kann für die Zuordnung der Handlungssequenz ein Abspeichern der manuellen Benutzerinteraktion und/oder des zumindest einen Betriebsparameters in Korrelation erfolgen. Somit kann bei einer Mustererkennung auf vergangene Benutzerinteraktionen zurückgegriffen werden.

Im Rahmen der Erfindung kann ferner vorgesehen sein, dass mehrere Handlungssequenzen abgespeichert werden und ein Rezept bilden, insbesondere welches durch einen Benutzer nachträglich manuell bearbeitbar ist. Somit können beispielsweise mehrere Benutzerinteraktionen zu einer Handlungssequenz führen, wobei mehrere Handlungssequenzen zu einem Rezept führen können. Das Rezept kann beispielsweise die Handlungssequenzen Zwiebeln zubereiten, Tomaten zubereiten, Fleisch garen und/oder dergleichen umfassen. Das Rezept kann automatisch einem Namen zugeordnet werden, wobei beispielsweise die Handlungssequenzen in ähnlicher Art und Weise zur Erkennung des Rezeptes anhand bekannter Zubereitungsarten führen können. Somit kann der Kochprozess in einfacher Art und Weise in einem Rezept abgebildet werden, indem mehrere Handlungssequenzen nacheinander durch den Benutzer aufgezeichnet werden, wobei jeweils die entsprechenden Zutaten erkannt werden können. Anschließend kann vorgesehen sein, dass das Rezept und/oder die Handlungssequenzen dem Benutzer zum Beispiel an einem Display des Küchengerätes, einem Computerbildschirm oder dergleichen angezeigt werden, sodass dieser die Handlungssequenzen und/oder das Rezept nachbearbeiten kann. Dabei kann eine Feinkorrektur vorgesehen sein, indem beispielsweise Gewichtsangaben verändert werden, wenn der Benutzer beim manuellen Abarbeiten des Rezeptes seine eigenen Vorgaben nicht exakt eingehalten hat. Darüber hinaus ist es denkbar, dass durch die nachträgliche manuelle Bearbeitung dem Rezept Metaeigenschaften zugeordnet werden können, wie beispielsweise Name, Anlass oder dergleichen. Ferner ist auch ein Ergänzen von Fotos, persönlichen Anmerkungen oder dergleichen denkbar. Somit kann das Rezept insbesondere unabhängig vom manuellen Kochprozess, weiter individualisiert werden und somit aufgewertet werden.

Es ist ferner denkbar, dass bei einem erfindungsgemäßen Verfahren das Verfahren folgenden Schritt umfasst:
- Senden des Rezeptes und/oder der Handlungssequenz an ein mobiles Endgerät und/oder einen Server, insbesondere wobei das Rezept und/oder die Handlungssequenz auf dem Server aufbereitet wird.

Vorzugsweise kann das Aufbereiten des Rezeptes und/oder das Senden des Rezeptes durchgeführt werden, bevor es dem Benutzer anderen Benutzern zur Verfügung gestellt wird. Durch das Senden des Rezeptes und/oder der Handlungssequenz können die jeweiligen Daten dem Benutzer in komfortabler Art und Weise zur Verfügung gestellt werden, sodass dieser die Daten nachbearbeiten kann, teilen kann oder für sich selbst abspeichern kann. Ist das Senden an einen Server vorgesehen, kann das Rezept zum Beispiel einer Online-Community durch den Benutzer zur Verfügung gestellt werden. Insbesondere kann ein Anlernen der Referenzdatenbank durch das Senden des Rezeptes und/oder der Handlungssequenz unterstützt werden, sodass zukünftige Zutaten und/oder Handlungssequenzen schneller und/oder zuverlässiger erkannt werden können. Das mobile Endgerät kann vorzugsweise ein Smartphone, Tablet oder dergleichen umfassen, sodass die Daten dem Benutzer direkt persönlich zur Verfügung gestellt werden können.

Vorzugsweise kann bei einem erfindungsgemäßen Verfahren das Verfahren folgenden Schritt umfassen:
- Anzeigen der erkannten Zutat und/oder der Handlungssequenz auf einer Anzeigeeinheit des Küchengerätes, insbesondere wobei eine Bestätigung der erkannten Zutat durch den Benutzer erwartet wird.

Somit kann der Benutzer die Zutat und/oder die Handlungssequenz visuell überprüfen, um gegebenenfalls Korrekturen vornehmen zu können. Somit kann der Benutzer sicher sein, dass die Zutat und/oder die Handlungssequenz korrekt erkannt wurde. Die Bestätigung durch den Benutzer stellt insbesondere eine Validierung dar, sodass Fehlererkennungen korrigiert werden können oder nicht in eine Datenbank übernommen werden. Zusätzlich oder alternativ ist es denkbar, dass eine Anzeige des zumindest einen Betriebsparameters und/oder des gesamten Rezeptes erfolgt. Durch die Anzeige des Betriebsparameters kann dem Benutzer ein weiteres Detail des Kochprozesses dargestellt werden, sodass dieser sein eigenes Kochverhalten optimieren kann und/oder Fehlerkennungen auf den Grund gehen kann. Insgesamt kann durch die Anzeige die Interaktivität mit dem Benutzer weiter verbessert sein, sodass dieser in die Erkennung des Kochprozesses bzw. der Zutat eingebunden ist und insbesondere jederzeit eingreifen kann.

Im Rahmen der Erfindung kann ferner vorgesehen sein, dass vor dem Erfassen des zumindest einen Betriebsparameters eine Bestätigung einer Hinzugabe der Zutat durch den Benutzer erforderlich ist. Dies kann beispielsweise durch Drücken einer Taste einer Benutzerschnittstelle erfolgen. Dadurch kann beispielsweise sichergestellt sein, dass der Benutzer die gewünschte Menge der Zutat dem Küchengerät zugeführt hat und/oder ein Einwiegevorgang abgeschlossen wird. Darüber hinaus ist durch die Bestätigung der Hinzugabe der Zutat der Kochprozess in einfacher Art und Weise in einen weiteren Teilabschnitt unterteilbar, sodass beispielsweise vor dem Einwiegen der nächsten Zutat klargestellt ist, dass zwei unterschiedliche Zutaten aufeinanderfolgen, sodass deren gemessenes Gewicht nicht zu einer Fehlerkennung führt.

Vorzugsweise kann bei einem erfindungsgemäßen Verfahren das Verfahren folgenden Schritt umfassen:
- Validieren der Zutat, der Handlungssequenz und/oder des Rezeptes, insbesondere sodass eine kritische Handlungssequenz erkennbar ist.

Das Validieren kann beispielsweise eine Bestätigung durch den Benutzer umfassen. Ferner kann das Validieren automatisch durchgeführt werden und eine externe Prüfung umfassen. Insbesondere kann das Validieren ferner dadurch durchgeführt werden, dass der gleiche Kochprozess durch einen Benutzer oder durch mehrere Benutzer mehrfach durchgeführt wird. Dadurch kann sichergestellt werden, dass zum einen nicht derartige Kochprozesse in eine Datenbank gelangen, deren Ergebnisse ungenießbar sind oder welche gegebenenfalls zu einer Beschädigung des Küchengerätes führen können. Ferner kann beispielsweise für die Einstellung von Soll-Parametern ein Mittelwert gebildet werden, so dass geringfügige Abweichungen bei der manuellen Benutzerinteraktion ausgeglichen werden können. Somit kann durch die Validierung eine Qualitätssicherung der aufgezeichneten Benutzerinteraktionen, Handlungssequenzen und/oder Rezepte durchgeführt werden. Unter der kritischen Handlungssequenz kann dabei eine Handlungssequenz, welche insbesondere Teil des Rezeptes sein kann, verstanden werden, die ein bestimmtes Qualitätsmaß nicht erfüllt.

Bei einem erfindungsgemäßen Verfahren kann ferner vorgesehen sein, dass das Validieren zumindest einen der folgenden Schritte umfasst:
- Auffinden der Zutat in einer Validierungsdatenbank, insbesondere durch Auffinden eines Textelementes in der Validierungsdatenbank,
- Vergleichen des zumindest einen Betriebsparameters und/oder der manuellen Benutzerinteraktion mit einem Validierungsdatensatz, insbesondere wobei der Validierungsdatensatz durch eine Big-Data-Analyse erzeugt wird.

In der Validierungsdatenbank können vorzugsweise kritische und/oder unkritische Zutaten aufgelistet sein. Vorzugsweise können sowohl kritische als auch unkritische Zutaten aufgelistet sein, wobei jede Zutat mit Metadaten versehen ist, welche die Zutat als kritisch oder unkritisch klassifizieren. Ferner kann der zumindest eine Betriebsparameter mit einem Validierungsdatensatz verglichen werden. Der Validierungsdatensatz umfasst vorzugsweise Validierungsparameter und/oder Validierungsinteraktionen, die Aufschluss darüber geben, ob der zumindest eine Betriebsparameter und/oder die manuelle Benutzerinteraktion als kritisch zu bewerten ist. Dadurch kann beispielsweise überprüft werden, ob ein bestimmter Betriebsparameter schädlich für die Zutat ist und/oder für die Handlungssequenz. So ist es beispielsweise denkbar, dass Fleisch bei einer bestimmten Temperatur verbrennt und somit der Validierungsdatensatz einen Grenzwert umfasst, bis zu welchem das Fleisch erhitzt werden kann, ohne dass dieses einen bestimmten Qualitätsverlust erleidet. Die Validierung kann insbesondere durch eine Big-Data-Analyse durchgeführt werden, wobei vorzugsweise bestehende Rezepte und/oder Handlungssequenzen in die Big-Data-Analyse einbezogen werden, um auf kritische oder unkritische Zutaten bzw. Handlungssequenzen zu schließen. Insbesondere können bei der Big-Data-Analyse neuronale Netze eingebunden werden. Dadurch kann mithilfe künstlicher Intelligenz die Digitalisierung des Kochprozesses insbesondere zur Steigerung der Ergebnisqualität verbessert werden.

Es kann ferner vorgesehen sein, dass bei einem erfindungsgemäßen Verfahren das Verfahren folgenden Schritt umfasst:
- Ausgabe eines Verbesserungsvorschlags in Abhängigkeit von Daten der Referenzdatenbank und/oder der Validierungsdatenbank.

Durch den Verbesserungsvorschlag kann beispielsweise die Handlungssequenz anhand bekannter Handlungssequenzen optimiert werden. So ist es denkbar, dass aus der Referenzdatenbank und/oder der Validierungsdatenbank hervorgeht, dass es vorteilhaft ist, eine bestimmte Menge Gewürz zu verwenden, wenn eine bestimmte Menge Fleisch vorgesehen ist. Verwendet der Benutzer weniger Gewürz, kann der Verbesserungsvorschlag die Verwendung von mehr Gewürz umfassen. Somit kann ein dem Benutzer bekanntes Rezept mithilfe der Referenzdatenbank und/oder der Validierungsdatenbank insbesondere im Hinblick auf eine Massentauglichkeit, verbessert werden.

Gemäß einem weiteren Aspekt der Erfindung ist ein Küchengerät zum Durchführen eines Kochprozesses beansprucht. Das Küchengerät weist ein Kochgefäß zur Aufnahme von Zutaten und eine Bearbeitungsvorrichtung zum Bearbeiten der Zutaten auf. Ferner umfasst das Küchengerät eine Benutzerschnittstelle für eine manuelle Benutzerinteraktion. Weiterhin ist eine Sensorvorrichtung zum Erfassen zumindest eines Betriebsparameters während des Kochprozesses vorgesehen. Die Benutzerschnittstelle ist mit einem integrierten Steuergerät verbunden, durch welches ein erfindungsgemäßes Verfahren durchführbar ist.

Die Bearbeitungsvorrichtung zum Bearbeiten der Zutaten umfasst vorzugsweise ein Rührwerk zum Durchmischen und/oder Zerkleinern von Zutaten. Ferner kann die Bearbeitungsvorrichtung z.B. ein Heizelement zum Erwärmen der Zutaten aufweisen. Die Benutzerschnittstelle kann vorzugsweise einen Drehknopf und/oder ein Display, insbesondere Touchdisplay umfassen. Dadurch kann der Benutzer die manuelle Benutzerinteraktion durchführen und beispielsweise eine bestimmte Heiztemperatur oder dergleichen vorgeben. Durch die Sensorvorrichtung kann zumindest ein Betriebsparameter während des Kochprozesses erfasst werden, wobei beispielsweise ein zeitlicher Verlauf des Betriebsparameters aufgezeichnet werden kann. Dadurch, dass die Benutzerschnittstelle mit dem integrierten Steuergerät verbunden ist, kann das Küchengerät dazu verwendet werden, ein Verfahren, wie zuvor beschrieben, durchzuführen. Dazu kann der Benutzer das Verfahren über die Benutzerschnittstelle und das integrierte Steuergerät auslösen.

Dadurch kann der Benutzer mit Kauf des Küchengerätes beispielsweise bereits vollständig auf die Funktion der Digitalisierung des Kochprozesses zugreifen. Ferner kann beispielsweise das Rezept auf dem Küchengerät verbleiben, sodass ein Austausch mit externen Datenbanken oder dergleichen unterbleibt. Insbesondere können die Referenzdatenbank und/oder die Validierungsdatenbank über Zusatzmodule bereitgestellt werden. Somit bringt ein erfindungsgemäßes Küchengerät die gleichen Vorteile mit sich, wie sie bereits ausführlich in Bezug auf ein erfindungsgemäßes Verfahren beschrieben worden sind.

Gemäß einem weiteren Aspekt der Erfindung ist ein System zur Digitalisierung eines Kochprozesses beansprucht. Dabei weist das System ein Küchengerät, insbesondere ein erfindungsgemäßes Küchengerät, zum Durchführen des Kochprozesses auf. Das Küchengerät weist dabei ein Kochgefäß zur Aufnahme von Zutaten sowie eine Bearbeitungsvorrichtung zum Bearbeiten der Zutaten auf. Darüber hinaus umfasst das Küchengerät eine Benutzerschnittstelle für eine manuelle Benutzerinteraktion. Ferner umfasst das System eine Sensorvorrichtung zum Erfassen zumindest eines Betriebsparameters während des Kochprozesses. Weiterhin ist eine Recheneinheit vorgesehen, durch welche eine Zutat durch Interpretation zumindest des Betriebsparameters und der manuellen Benutzerinteraktion identifizierbar ist.

Somit bringt ein erfindungsgemäßes System die gleichen Vorteile mit sich, wie sie bereits ausführlich mit Bezug auf ein erfindungsgemäßes Verfahren und/oder ein erfindungsgemäßes Küchengerät beschrieben worden sind. Durch die Recheneinheit ist ein erfindungsgemäßes Verfahren durchführbar.

Die Sensorvorrichtung kann insbesondere Teil des Küchengerätes sein oder eine eigenständige Einheit bilden. So ist es beispielsweise denkbar, dass die Sensorvorrichtung eine zusätzliche Kamera umfasst, welche in der Nähe des Küchengerätes angebracht wird, um den Kochprozess zu überwachen. Die Recheneinheit kann Teil eines integrierten Steuergerätes des Küchengerätes oder Teil eines Servers sein. Insbesondere können ein Server und die integrierte Steuereinheit des Küchengerätes in Kommunikationsverbindung stehen und somit gemeinsam die Recheneinheit bilden. Somit können durch ein erfindungsgemäßes System je nach Anforderungsprofil Rechenkapazitäten in unterschiedlicher Art und Weise genutzt werden. Durch die Verwendung eines Servers kann eine zentrale Stelle vorgegeben sein, an welcher die Rechenkapazität vorgesehen ist, sodass das integrierte Steuergerät des Küchengerätes nur eine geringe Rechenkapazität aufweist. Dadurch kann das integrierte Steuergerät entsprechend klein dimensioniert sein und somit mehr konstruktive Freiheiten des Küchengerätes ermöglichen. Darüber hinaus kann die Recheneinheit in ein Netzwerk, insbesondere ein neuronales Netz, eingebettet sein, durch welches die Interpretation des zumindest einen Betriebsparameters begünstigt ist.

Im Rahmen der Erfindung ist es denkbar, dass durch die Recheneinheit auf eine Referenzdatenbank zugreifbar und zur Interpretation zumindest des Betriebsparameters und/oder der manuellen Benutzerinteraktion ein Abgleich des zumindest einen Betriebsparameters und/oder und der manuellen Benutzerinteraktion mit der Referenzdatenbank durchführbar ist. Die Referenzdatenbank kann beispielsweise in einer Speichereinheit des Küchengerätes oder des Servers vorgesehen sein, sodass direkt durch die Recheneinheit auf die Referenzdatenbank zugegriffen werden kann. Ferner kann die Referenzdatenbank dezentral vorgesehen sein und auf einem weiteren Server oder mehreren Servern abgespeichert sein. Insbesondere kann die Referenzdatenbank Einträge zu unterschiedlichen Korrelationen von Zutaten, Betriebsparametern und Benutzerinteraktionen umfassen. Dadurch ist in einfacher Art und Weise, insbesondere durch eine Big-Data-Analyse, eine Interpretation des Betriebsparameters und der Benutzerinteraktion möglich.

Im Rahmen der Erfindung kann ferner vorgesehen sein, dass die Recheneinheit mit einer Speichereinheit in Kommunikationsverbindung steht, sodass die manuelle Benutzerinteraktion und/oder der zumindest eine Betriebsparameter in Korrelation zu der erkannten Zutat in der Speichereinheit abspeicherbar ist. Die Speichereinheit kann Teil des Küchengerätes, Teil eines Servers oder Teil einer mobilen Speichereinheit, wie eines USB-Sticks, eines mobilen Endgerätes oder dergleichen sein. Dadurch ist es denkbar, dass eine Handlungssequenz, mehrere Handlungssequenzen und/oder ein Rezept aufgezeichnet werden. Ferner kann durch die Speichereinheit eine Datenbank an individuellen Rezepten von einem Benutzer oder mehreren Benutzern vorgesehen sein, sodass diese an einem zentralen Ort zur Verfügung stehen.

Es ist ferner denkbar, dass durch die Recheneinheit bei einem erfindungsgemäßen System die manuelle Benutzerinteraktion einer Handlungssequenz des Kochprozesses zuordenbar ist. Somit kann durch die Handlungssequenz ein Teil eines Rezeptes oder ein vollständiges Rezept gebildet werden. Insbesondere kann vorgesehen sein, dass die Recheneinheit dazu ausgebildet ist. Die Interpretation des zumindest einen Betriebsparameters und der manuellen Benutzerinteraktion auf Basis der Handlungssequenz durchzuführen. Dabei können bekannte Handlungssequenzen mit der aktuellen Handlungssequenz verglichen werden, um die Zutat zu identifizieren oder ähnliche oder identische Handlungssequenzen aufzufinden und deren Zutat der aktuellen Zutat zuzuordnen.

Vorzugsweise kann bei einem erfindungsgemäßen System vorgesehen sein, dass die Sensorvorrichtung zumindest einen der folgenden Sensoren zum Erfassen des zumindest einen Betriebsparameters aufweist:
- Waage, insbesondere mit drei Wägezellen,
- Stromsensor,
- Temperatursensor,
- Kamera.

Bei der Waage kann es sich vorzugsweise um eine Dreipunktwaage handeln, bei welcher die Gewichtsverteilung ermittelbar ist. Somit kann beispielsweise bei der Hinzugabe der Zutat in das Kochgefäß und insbesondere beim Durchmischen der Zutat durch die Bearbeitungsvorrichtung das Bewegungsverhalten der Zutat analysiert werden. Dies kann wiederum ein Charakteristikum darstellen, um auf die Zutat zu schließen. Der Stromsensor kann vorzugsweise ein Amperemeter, ein Voltmeter und/oder dergleichen umfassen. Dadurch kann über den Stromsensor eine Energiemenge bestimmt werden, welche der Bearbeitungsvorrichtung zugeführt wird. Ferner ist es denkbar, dass es sich bei dem Stromsensor um einen Motorstromsensor eines Rührwerks handelt. Somit kann über den benötigten Motorstrom beim Zerkleinern und/oder Durchmischen der Zutat ein Widerstand der Zutat erkannt und damit auf die Zutat geschlossen werden, insbesondere in Verbindung mit dem Gewicht der Zutat. Der Temperatursensor kann zum Messen der Temperatur der Zutat und/oder der Bearbeitungsvorrichtung und/oder des Kochgefäßes ausgebildet sein. Insbesondere kann eine Temperaturänderung durch den Temperatursensor detektierbar sein. Die Kamera kann vorzugsweise Bilder aufzeichnen, durch deren Information auf die Zutat geschlossen werden kann. Weiterhin ist es insbesondere denkbar, dass die Sensorvorrichtung einen Drehwinkelmesser, beispielsweise eines Rührwerks der Bearbeitungsvorrichtung, aufweist. Darüber hinaus ist es denkbar, dass die Sensorvorrichtung einen RFID-Sensor aufweist. Dadurch können Zutaten z.B. beim Einfüllen in das Kochgefäß erkannt werden, wenn die Verpackung der Zutaten durch den Benutzer beim Einfüllen der Zutaten oberhalb des Kochgefäßes gehalten wird.

Vorzugsweise kann bei einem erfindungsgemäßen System die Sensorvorrichtung einen Zeitmesser umfassen, durch welchen ein zeitlicher Verlauf des zumindest einen Betriebsparameters erstellbar ist. Der Zeitmesser kann somit eine Uhr, insbesondere Stoppuhr, oder dergleichen umfassen. Zusätzlich oder alternativ kann die Recheneinheit den Zeitmesser aufweisen. Durch den zeitlichen Verlauf kann eine verbesserte Genauigkeit bei der Bestimmung des zumindest einen Betriebsparameters erreicht werden bzw. können weitere Informationen durch die zusätzliche Dimension der Zeit in den Betriebsparameter abgebildet werden. Dadurch kann die Genauigkeit bei der Erkennung der Zutat insgesamt verbessert sein.

Es ist ferner denkbar, dass bei einem erfindungsgemäßen System ein Server die Recheneinheit aufweist, und das Küchengerät über eine Datenschnittstelle mit dem Server in Kommunikationsverbindung bringbar ist. Die Datenschnittstelle kann vorzugsweise eine Netzwerkverbindung, insbesondere eine WLAN-Schnittstelle, eine LAN-Schnittstelle, eine Mobilfunkschnittstelle oder dergleichen umfassen. Dadurch kann in einfacher Art und Weise eine zentrale Recheneinheit vorgesehen sein, welche nicht vollständig in das Küchengerät integriert ist.

Vorzugsweise ist bei einem erfindungsgemäßen System eine Anzeigeeinheit vorgesehen, durch welche der Betriebsparameter und/oder die erkannte Zutat einem Benutzer anzeigbar ist. Insbesondere kann die Anzeigeeinheit ein Touchdisplay umfassen, sodass eine Benutzerinteraktion zum Ändern und/oder Bestätigen der Zutat und/oder des Betriebsparameters erfassbar ist. Somit kann der Benutzer in die Digitalisierung des Kochprozesses weiter eingebunden sein, sodass dieser insbesondere jederzeit die Möglichkeit hat, einzugreifen. Ferner können Fehlerkennungen reduziert werden und durch die Anzeigeeinheit eine Validierungsmöglichkeit gegeben sein.

Vorteilhafterweise kann bei einem erfindungsgemäßen System die Recheneinheit dazu ausgebildet sein, zur Durchführung einer Validierung die Zutat in einer Validierungsdatenbank aufzufinden und/oder den zumindest einen Betriebsparameter und/oder die manuelle Benutzerinteraktion mit einem Validierungsdatensatz, der insbesondere durch eine Big-Data-Analyse erzeugt ist, zu vergleichen. Durch die Validierung kann ein Qualitätsmaß vorgegeben sein, durch welches sichergestellt sein kann, dass die aufgezeichneten Handlungssequenzen durch den Benutzer eine vorgegebene Qualität einhalten, bevor die Daten einer Datenbank, dem Benutzer oder weiteren Benutzern zur Verfügung gestellt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Figur 1: ein erfindungsgemäßes System mit einem erfindungsgemäßen Küchengerät in schematischer Darstellung in einem ersten Ausführungsbeispiel,
- Figur 2: ein erfindungsgemäßes Verfahren in schematischer Darstellung der Verfahrensschritte in einem zweiten Ausführungsbeispiel,
- Figur 3a-b: eine detailliertere Darstellung von Verfahrensschritten des erfindungsgemäßen Verfahrens des zweiten Ausführungsbeispiels,
- Figur 4: ein erfindungsgemäßes Verfahren in schematischer Darstellung in einem dritten Ausführungsbeispiel,
- Figur 5: ein Rezept gemäß dem erfindungsgemäßen Verfahren des dritten Ausführungsbeispiels.
- Figuren 6a-c: Datenvergleiche bei einem erfindungsgemäßen Verfahren in weiteren Ausführungsbeispielen,

In den nachfolgenden Figuren werden für die gleichen technischen Merkmale auch von unterschiedlichen Ausführungsbeispielen die identischen Bezugszeichen verwendet.

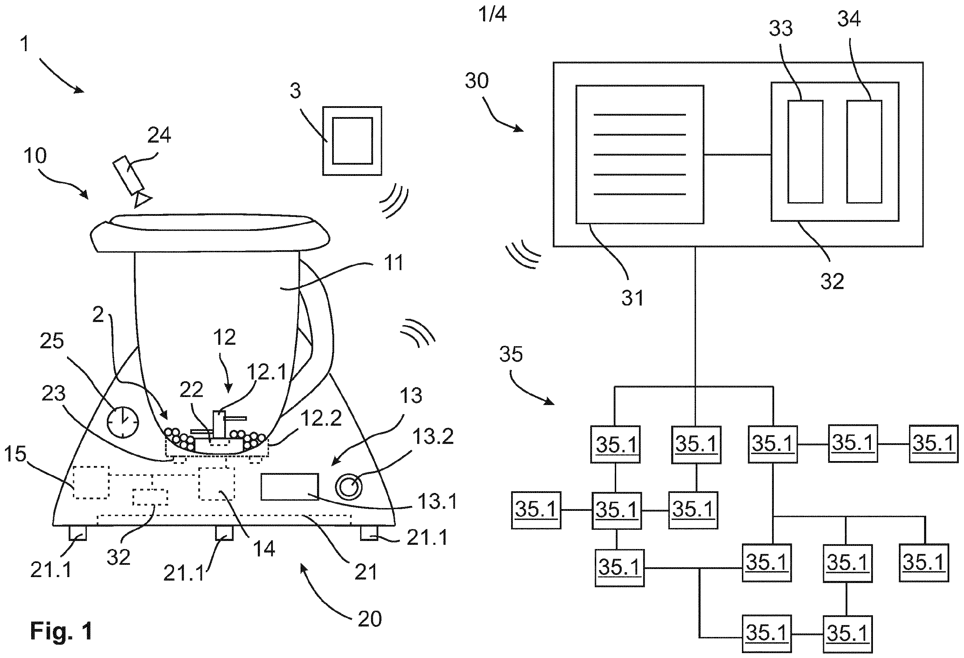

Figur 1 zeigt ein erfindungsgemäßes System 1 zur Digitalisierung eines Kochprozesses 200. Dabei ist ein erfindungsgemäßes Küchengerät 10 vorgesehen, welches zum Durchführen des Kochprozesses 200 mit einem Kochgefäß 11 geeignet ist. Das Kochgefäß 11 ist dabei zur Aufnahme von Zutaten 2 ausgebildet, sodass diese beispielsweise über einen Deckel in das Kochgefäß 11 hineingegeben werden können. Ferner weist das Küchengerät 10 eine Bearbeitungsvorrichtung 12 zum Bearbeiten der Zutaten 2 auf. Die Bearbeitungsvorrichtung 12 umfasst dabei ein Rührwerk 12.1 zum Durchmischen und/oder Zerkleinern der Zutaten 2. Darüber hinaus weist die Bearbeitungsvorrichtung 12 ein Heizelement 12.2 auf, welches zum Erwärmen der Zutaten 2 ausgebildet ist. Vorzugsweise handelt es sich bei dem Heizelement 12.2 um ein elektrisches Heizelement und bei dem Rührwerk 12.1 um ein elektromotorisch angetriebenes Rührwerk. Weiterhin umfasst das Küchengerät 10 eine Benutzerschnittstelle 13 zum Starten einer manuellen Benutzerinteraktion 201. Dazu weist die Benutzerschnittstelle 13 eine Anzeigeeinheit 13.1 sowie einen Drehknopf 13.2 auf. Über die Benutzerschnittstelle 13 kann der Benutzer somit komfortabel das Küchengerät 10 bedienen. Darüber hinaus weist das Küchengerät 10 eine Sensorvorrichtung 20 zum Erfassen 103 zumindest eines Betriebsparameters 210 während des Kochprozesses 200 auf. Im dargestellten Ausführungsbeispiel ist die Sensorvorrichtung 20 Teil des Küchengerätes 10. Es ist jedoch ebenfalls denkbar, dass die Sensorvorrichtung 20 als Zusatzmodul am Küchengerät 10 angebracht ist oder als eigenständige Einheit neben dem Küchengerät 10 vorgesehen ist. Weiterhin weist das Küchengerät 10 ein integriertes Steuergerät 14 auf, welches mit einer internen Speichereinheit 32 des Küchengerätes 10 verbunden ist. In der internen Speichereinheit 32 können z.B. der Betriebsparameter und die manuelle Benutzerinteraktion 201 abgespeichert werden. Ferner ist das Steuergerät 14 über eine Datenschnittstelle 15 mit einer Recheneinheit 31 in Kommunikationsverbindung bringbar ist. Dadurch ist es möglich, Prozesse auf der Recheneinheit 31 zu starten, in dem der Benutzer die Benutzerschnittstelle 13 des Küchengerätes 10 bedient, deren Signal entsprechend von dem integrieren Steuergerät 14 verarbeitet wird und gegebenenfalls eine Kommunikation mit der Recheneinheit 31 auslöst. Die Recheneinheit 31 ist dazu ausgebildet, eine Zutat 2 durch Interpretation 110 zumindest des zumindest einen Betriebsparameters 210 und der manuellen Benutzereingabe 201 zu identifizieren. Bei dem Betriebsparameter 210 handelt es sich vorzugsweise um einen Messwert, welcher insbesondere während des Kochprozesses 200 im Küchengerät 10 aufgezeichnet wird. Dazu umfasst die Sensorvorrichtung 20 eine Waage 21, um das Gewicht der hinzugegebenen Zutat 2 zu erfassen. Insbesondere umfasst die Waage 21 drei Wägezellen 21.1, welche als Standfuß des Küchengerätes ausgebildet sind. Dadurch kann durch die Waage 21 auch eine Gewichtsverteilung innerhalb des Kochgefäßes 11 erfasst werden, um auf die Zutat 2 zu schließen. So ist es beispielsweise denkbar, dass ein bestimmtes Fließ- und/oder Schüttverhalten der Zutat 2 bei einer bestimmten Drehzahl des Rührwerks 12.1 charakteristisch für die zu identifizierende Zutat 2 ist. Insbesondere kann das Rührwerk 12.1 dazu mit einem Drehzahlmesser ausgestattet sein. Ferner ist es denkbar, dass die Sensorvorrichtung 20 einen Stromsensor 22 aufweist, durch welchen der Motorstrom des Rührwerks 12.1 erfassbar ist. Ein höherer Motorstrom bei vorgegebener Drehzahl kann somit auf einen höheren Widerstand durch die Zutat 2 schließen lassen. Ferner ist ein Temperatursensor 23 vorgesehen, um die Temperatur der Zutat 2 und/oder im Kochgefäß 11 erfassen zu können. Auch über den Temperatursensor 23 kann somit ein weiteres Charakteristikum, nämlich beispielsweise das Erwärmungsverhalten, insbesondere die spezifische Wärmekapazität, der Zutat 2, bestimmbar sein. Weiterhin ist eine Kamera 24 vorgesehen, um die Zutat 2 visuell zu erfassen und beispielsweise über eine Farbveränderung der Zutat 2 während eines Erwärmungsvorgangs auf die Zutat 2 schließen zu können. Ferner umfasst die Sensorvorrichtung 20 einen Zeitmesser 25, durch welchen ein zeitlicher Verlauf des zumindest einen Betriebsparameters 210 aufzeichenbar ist. Somit kann durch den Zeitmesser 25, welcher insbesondere eine Uhr umfassen kann, dem Betriebsparameter 210 eine zeitliche Dimension gegeben werden, sodass eine höhere Zuverlässigkeit beim Identifizieren 104 der Zutat 2 ermöglicht ist. Im vorliegenden Ausführungsbeispiel wird das Identifizieren 104 bzw. Interpretation 110 des Betriebsparameters 210 sowie der manuellen Benutzerinteraktion 201 durch einen Server 30 durchgeführt, welcher die Recheneinheit 31 aufweist. Um einen Abgleich der Daten mit bekannten Referenz- und/oder Validierungsdaten durchführen zu können, weist der Server 30 ferner eine Speichereinheit 32 mit einer Referenzdatenbank 33 und einer Validierungsdatenbank 34 auf. Darüber hinaus ist der Server 30 Teil eines Netzwerks 35, insbesondere eines neuronalen Netzes, bzw. an ein solches angebunden. Über das Netzwerk 35, welches eine Vielzahl an Netzwerkknoten 35.1 aufweist, ist es möglich, eine Big-Data-Analyse durchzuführen, wobei die Netzwerkknoten 35.1 Datenbanken mit bekannten Charakteristiken von Zutaten in großer Zahl umfassen, welche analysiert werden und dem Server 30 zur Verfügung gestellt werden können. Dadurch kann die Recheneinheit 31, insbesondere durch Zugriff auf das Netzwerk 35, die Interpretation 110 des zumindest einen Betriebsparameters 210 Durchführen und damit auf die Zutat 2 schließen. Um dem Benutzer die Daten in Zwischenschritten und/oder als Ergebnis anzuzeigen können die Daten ferner an ein mobiles Endgerät 3, d.h. insbesondere ein Smartphone, Tablet oder dergleichen, gesendet werden, welches mit dem Küchengerät 10 und/oder dem Server 30 in Kommunikationsverbindung stehen kann.

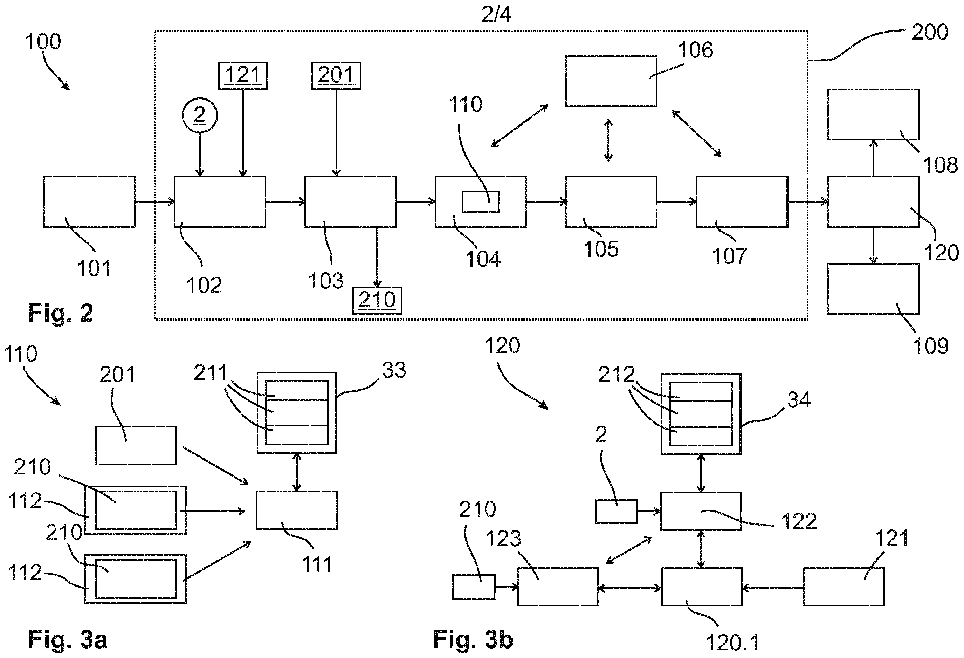

Figur 2 zeigt ein Verfahren 100 zur Digitalisierung eines Kochprozesses 200 bei einem Küchengerät 10. Dazu ist vorzugsweise zunächst ein Starten 101 des Kochprozesses 200 durch den Benutzer erforderlich. Dadurch bestätigt der Benutzer, dass ein Kochprozess 200 durchgeführt wird, der zumindest teilweise manuell erfolgt. Das Küchengerät 10 erkennt dadurch ferner, dass bestimmte Abschnitte des folgenden Prozesses bzw. der folgenden Handlungen aufgezeichnet werden sollen. Daraufhin ist eine Aufnahme 102 einer Zutat 2 durch ein Kochgefäß 11 des Küchengerätes 10 vorgesehen. Hat der Benutzer die Zutat 2 vollständig eingefüllt, ist eine Bestätigung 121 erforderlich, durch welche der Benutzer dem Küchengerät 10 mitteilt, dass die Zutat 2 vollständig eingefüllt ist. Mit der Bestätigung 121 oder nach der Bestätigung 121 erfolgt ferner eine manuelle Benutzerinteraktion 201, durch welche ein bestimmtes Verhalten des Küchengerätes 10 ausgelöst wird. Beispielsweise startet der Benutzer ein Rührwerk 12.1 des Küchengerätes 10 bei einer bestimmten Drehzahl oder den Heizvorgang eines Heizelementes 12.2. Insbesondere nach einem Erfassen 103 zumindest eines Betriebsparameters 210 infolge der manuellen Benutzerinteraktion 201 erfolgt ein Identifizieren 104 der Zutat 2 durch Interpretieren 110 des zumindest einen Betriebsparameters 210 und der zumindest einen manuellen Benutzerinteraktion 201.

Figur 3a zeigt dazu das Interpretieren 110 in schematischer, beispielhafter Darstellung. Dabei erfolgt ein Abspeichern 112 des zumindest einen Betriebsparameters 210 während eines Kochschrittes des Kochprozesses 200, welcher durch eine manuelle Benutzerinteraktion 201 ausgelöst wurde. Vorzugsweise werden mehrere Betriebsparameter 210 gleichzeitig aufgenommen und abgespeichert, sodass ein möglichst umfassendes Bild des charakteristischen Verhaltens der Zutat 2 vorliegt. Im Zusammenhang mit der ausgeführten manuellen Benutzerinteraktion 201 erfolgt schließlich ein Abgleich 111, wozu beispielsweise Referenzdatensätze 211 einer Referenzdatenbank 33 herangezogen werden. Die Referenzdatensätze 211 können Bibliotheksdaten bekannter Zutaten umfassen, die das jeweilige charakteristische Verhalten bei der ausgeführten Benutzerinteraktion 210 widerspiegeln. So ist es beispielsweise denkbar, dass Zwiebeln eine charakteristische Motorstromkurve erzeugen, wenn diese bei vorgegebener Drehzahl im Rührwerk 12.1 des Küchengerätes 10 zerkleinert werden. Gleichzeitig kann vorgesehen sein, dass die Zwiebeln erhitzt werden sollen, wobei auch deren Erwärmungskurve aufgezeichnet werden und dadurch auf die spezifische Wärmekapazität der Zutat 2 geschlossen werden kann. Wird nun in den Referenzdatensätzen 211 ein ähnliches Stoffverhalten aufgefunden, kann somit mit hoher Wahrscheinlichkeit auf Zwiebeln geschlossen werden. Insbesondere kann die Referenzdatenbank 33 um Daten aus einer Big-Data-Analyse ergänzt werden oder auf derartigen Daten beruhen.

Nach dem Identifizieren 104 erfolgt vorzugsweise ein Zuordnen 105 der Zutat 2 und/oder der manuellen Benutzerinteraktion 201 zu einer Handlungssequenz 202. Die Handlungssequenz 202 kann vorzugsweise einen Teil eines Rezeptes 203 umfassen, sodass ein Zuordnen 107 der Handlungssequenz 202 zu einem Rezept 203 anschließend erfolgt. Dadurch kann vorzugsweise das Rezept 203 Schritt für Schritt digitalisiert werden. Ferner kann nach oder während des Identifizierens 104 der Zutat 2, dem Zuordnen 105 zu einer Handlungssequenz 202 und dem Zuordnen 107 zu dem Rezept 203 ein Anzeigen 106 an den Benutzer erfolgen, sodass dieser während des Kochprozesses jederzeit über den aktuellen Stand der Datenerfassung informiert ist. Darüber hinaus kann in Abhängigkeit von der Anzeige 106 eine Bestätigung 121 durch den Benutzer vorgesehen sein, bevor der jeweils folgende Verfahrensschritt erfolgt. Dadurch kann sichergestellt sein, dass Fehler frühzeitig während des Verfahrens 100 erkannt werden und manuell oder automatisch korrigiert werden können. Nach dem Zuordnen 107 zu dem Rezept 203 ist ferner ein Senden 108 des Rezeptes 203 und/oder der Handlungssequenz 202 an ein mobiles Endgerät 3 und/oder einen Server 30 vorgesehen. Das mobile Endgerät 3 kann beispielsweise ein Smartphone oder Tablett des Benutzers sein, sodass dieser das Rezept 203 und/oder Handlungssequenz 202 digital vorliegen hat. Über einen Server 30 kann das Rezept 203 und/oder die Handlungssequenz 202 beispielsweise einer Online-Community zur Verfügung gestellt werden. Vorzugsweise vor oder nach dem Senden 108 der entsprechenden Daten an den Server 30 oder das mobile Endgerät 3 ist ein Validieren 120 vorgesehen.

Figur 3b zeigt das Validieren 120 in schematischer Darstellung. Dabei ist ein Vergleich 123 des aufgezeichneten Betriebsparameters 210 mit einem Validierungsdatensatz 212 vorgesehen. Vorzugsweise wird der Validierungsdatensatz 212 dabei durch eine Big-Data-Analyse erzeugt und/oder aus einer Validierungsdatenbank 34 abgerufen. Dazu ist ein Auffinden 122 der Zutat 2 in einer Validierungsdatenbank 34 vorgesehen, wobei ein Textelement der Zutat 2 erzeugt werden und ein Auffinden des Textelementes in der Validierungsdatenbank 34 erfolgen kann. Dabei ist es ferner denkbar, dass das Auffinden 122 der Zutat 2 in der Validierungsdatenbank 34 anhand des Validierungsdatensatzes 212 selbst ein Validierungsergebnis 120.1 darstellt. Zusätzlich oder alternativ kann das Validieren 120 eine Bestätigung 121 eines Benutzers umfassen. Durch das Validieren 120 kann sichergestellt sein, dass der aufgezeichnete Kochprozess 200 bestimmten Qualitätskriterien genügt. Insbesondere kann dadurch sichergestellt werden, dass lediglich Rezepte 203 mit unbedenklichen Zutaten 2 beispielsweise in einer Online-Community zur Verfügung gestellt werden. Ferner kann auf Grundlage der Validierung 120 eine Ausgabe eines Verbesserungsvorschlages erfolgen, bei welcher bestimmte Handlungssequenzen 202 verbessert sind. Dies kann beispielsweise auf einer durchschnittlichen Wahrnehmung einer Speisequalität beruhen. Vorzugsweise können die Bestätigung 121 durch den Benutzer, das Auffinden 122 der Zutat 2 in der Validierungsdatenbank 34 und/oder der Vergleich 123 zu dem Validierungsergebnis 120.1 führen, welches die Zutat 2, die Handlungssequenz 202 und/oder das Rezept 203 als kritisch oder unkritisch klassifizieren.

Insbesondere anhand des Validierungsergebnisses 120.1 kann ferner vor oder nach dem Senden 108 der Daten an den Server 30 kann eine Ausgabe 109 eines Verbesserungsvorschlags erfolgen. Der Verbesserungsvorschlag kann z.B. Anpassungen des Rezeptes 304 an eine Qualitätsvorgabe oder dergleichen umfassen.

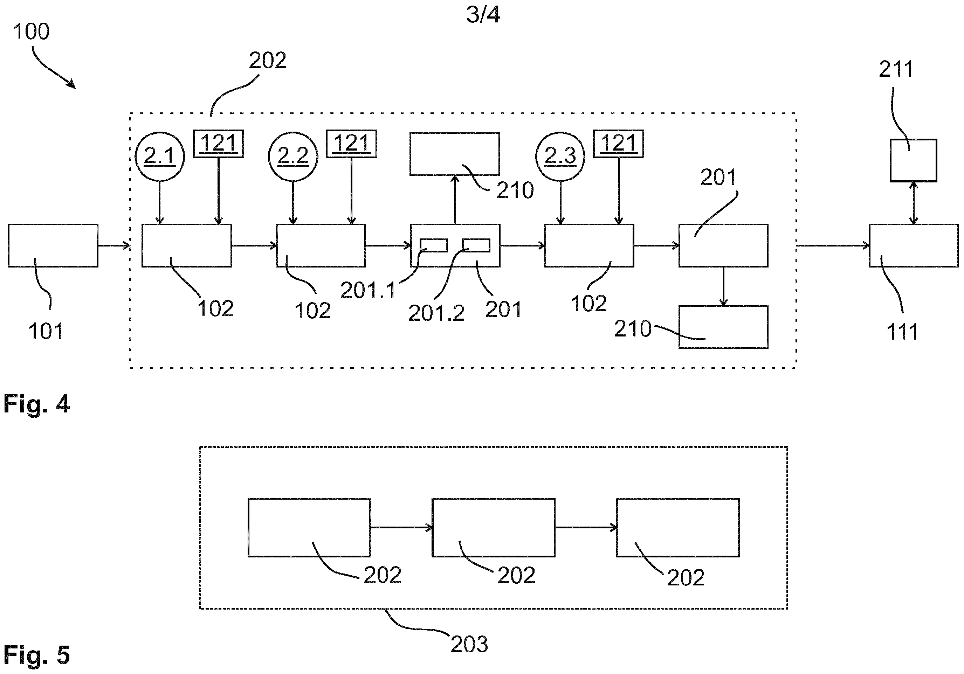

Figur 4 zeigt ferner ein Verfahren 100 in einem weiteren Ausführungsbeispiel. Dabei ist ein Starten 101 einer Digitalisierung eines Kochprozesses 200 vorgesehen. Dabei wird zunächst eine Handlungssequenz 202, aufweisend mehrere Zutaten 2.1, 2.2, 2.3 und mehrere manuelle Benutzerinteraktionen 201 aufgezeichnet und schließlich interpretiert. So ist vorgesehen, dass zunächst eine Aufnahme 102 einer ersten Zutat 2.1 in einem Kochgefäß 11 eines Küchengerätes 10 erfolgt. Nach der ersten Zutat 2.1 folgt eine Aufnahme 102 einer zweiten Zutat 2.2. Vorzugsweise ist eine Bestätigung 121 nach der Hinzugabe jeder der Zutaten 2.1, 2.1 durch den Benutzer erforderlich, sodass für die Interpretation der Daten deutlich wird, dass zwei unterschiedliche Zutaten 2.1, 2.2 hinzugegeben wurden. Darüber hinaus kann schließlich jeder Zutat 2.1, 2.2 beispielsweise über eine Waage 21 des Küchengerätes 10 ein Betriebsparameter 210, d.h. insbesondere ein Gewicht, zugeordnet werden. Anschließend erfolgt eine manuelle Benutzerinteraktion 201, die beispielsweise ein Zerkleinern und Durchmischen der vorhandenen Zutaten 2.1, 2.2 startet bzw. durchführt. Insbesondere kann eine manuelle Benutzerinteraktion 201 mehrere manuelle, vorzugsweise unterschiedliche, Teilinteraktionen 201.1, 201.2 umfassen, welche wiederum Teilsequenzen abbilden. Bei der Durchführung der Zerkleinerung wird dabei zumindest ein Betriebsparameter 210 aufgezeichnet, welcher der Benutzerinteraktion 201 zugeordnet werden kann. Anschließend erfolgt die Aufnahme 102 einer dritten Zutat 2.3, auf welche erneut eine manuelle Benutzerinteraktion 201 folgt. Die manuelle Benutzerinteraktion 201 kann ein erneutes Zerkleinern der nun insgesamt vorliegenden Masse im Kochgefäß 11 umfassen und/oder ein Erhitzen. So ist es beispielsweise denkbar, dass die erste Zutat 2.1 Zwiebeln und die zweite Zutat 2.2 Knoblauchzehen umfasst. Diese werden zunächst zerkleinert und angedünstet, bevor mit der dritten Zutat 2.3 Tomaten hinzugegeben werden, welche erneut zerkleinert und erhitzt werden, während jedoch Zwiebeln und Knoblauchzehen noch im Kochgefäß 11 ebenfalls vorhanden sind. Auch daraus erfolgt die Aufzeichnung zumindest eines weiteren Betriebsparameters 210, der der manuellen Benutzerinteraktion 201 zugeordnet werden kann. Somit liegt zunächst die gesamte Handlungssequenz 202 mit unterschiedlichen Eingaben und Systemreaktionen vor. Die Handlungssequenz, d.h. insbesondere die Handlungsfolge in Kombination mit den aufgezeichneten Betriebsparametern 210, kann somit zu einem Abgleich 111 führen, über welchen derartige, gegebenenfalls standardisierte Handlungssequenzen über eine Referenzdatenbank 33 aufgefunden werden. Dadurch können bekannte Teilschritte eines Rezeptes 203 ebenfalls als Ganzes und daraus entsprechend auch die beteiligten Zutaten 2.1, 2.2, 2.3 erkannt werden.

Gemäß Figur 5 ergeben schließlich mehrere Handlungssequenzen 202 ein Rezept 203, welches im Kochprozess 200 zumindest teilweise manuell durch den Benutzer durchgeführt wurde und anschließend digitalisiert vorliegt.

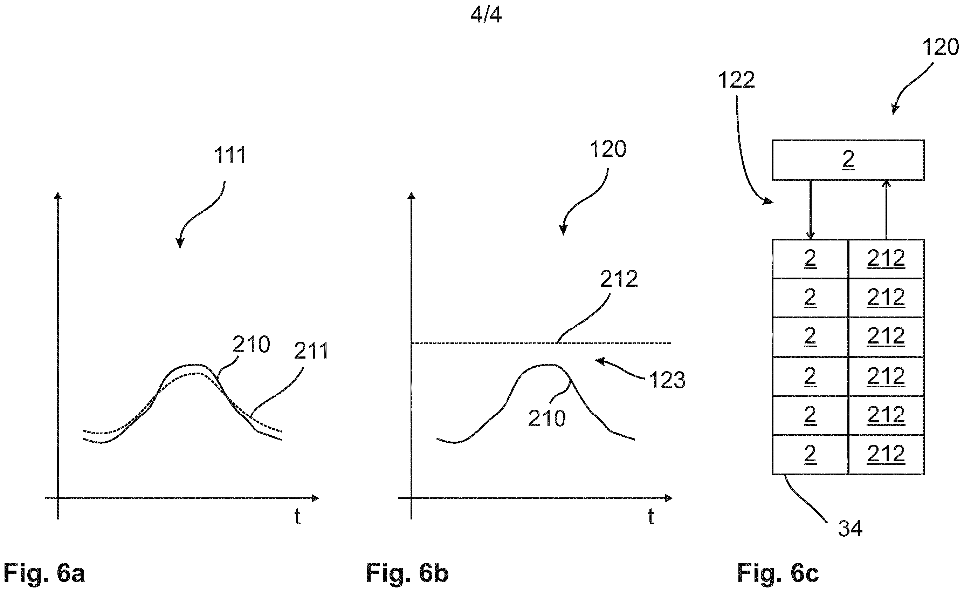

Figur 6a zeigt schematisch einen zeitlichen Verlauf eines Betriebsparameters 210, welcher zum Abgleich 111 der Daten einem Referenzdatensatz 211, der ebenfalls als zeitlicher Verlauf vorliegt, gegenübergestellt wird. Weichen der Betriebsparameter 210 und der Referenzdatensatz 211 innerhalb einer bestimmten Toleranz voneinander ab, kann dadurch mit hoher Wahrscheinlichkeit auf das Vorliegen einer bestimmten Zutat 2 geschlossen werden, deren Charakteristikum durch den Referenzdatensatz 211 im zeitlichen Verlauf abgebildet ist.

Figur 6b zeigt schematisch den zeitlichen Verlauf des Betriebsparameters 210, welcher zum Validieren 120 einem Validierungsdatensatz 212, welcher einen Grenzwert umfasst, in einem Vergleich 123 gegenübergestellt wird. Überschreitet der Betriebsparameter 210 den Grenzwert des Validierungsdatensatzes 212 innerhalb des aufgezeichneten zeitlichen Verlaufs nicht, kann der dem Betriebsparameter 210 zugeordnete Abschnitt des Kochprozesses 200 als unkritisch eingestuft werden.

Figur 6c zeigt eine weitere Möglichkeit eines Validierens 120 in einem weiteren Ausführungsbeispiel. Dabei wird eine Zutat 2 selbst validiert, wobei die Zutat 2 in einer Validierungsdatenbank 34 mit Einträgen zu unterschiedlichen Zutaten 2 gesucht wird. In der Validierungsdatenbank 34 ist ferner jeder Zutat 2 ein Validierungsdatensatz 212 zugeordnet, welcher die jeweilige Zutat 2 als kritisch oder unkritisch klassifiziert. Ist ein Auffinden 122 der zu validierenden Zutat 2 in der Validierungsdatenbank 34 erfolgreich, wird der zugehörige Validierungsdatensatz 212, insbesondere als Validierungsergebnis 120.1, ausgegeben, so dass eine Klassifikation z.B. dem Benutzer anzeigbar ist.

Die voranstehende Erläuterung der Ausführungsformen beschreibt die vorliegende Erfindung ausschließlich im Rahmen von Beispielen.

### Bezugszeichenliste

- 1: System
- 2: Zutaten
- 2.1: erste Zutat
- 2.2: zweite Zutat
- 2.3: dritte Zutat
- 3: mobiles Endgerät

- 10: Küchengerät
- 11: Kochgefäß
- 12: Bearbeitungsvorrichtung
- 12.1: Rührwerk
- 12.2: Heizelement
- 13: Benutzerschnittstelle
- 13.1: Anzeigeeinheit
- 13.2: Drehknopf
- 14: Steuergerät
- 15: Datenschnittstelle

- 20: Sensorvorrichtung
- 21: Waage
- 21.1: Wägezelle
- 22: Stromsensor
- 23: Temperatursensor
- 24: Kamera
- 25: Zeitmesser

- 30: Server
- 31: Recheneinheit
- 32: Speichereinheit
- 33: Referenzdatenbank
- 34: Validierungsdatenbank
- 35: Netzwerk
- 35.1: Netzwerkknoten

- 100: Verfahren
- 101: Start
- 102: Aufnahme von 2
- 103: Erfassen von 210
- 104: Identifizieren von 2
- 105: Zuordnen zu 202
- 106: Anzeigen
- 107: Zuordnen zu 203
- 108: Senden von 203
- 109: Ausgabe eines Verbesserungsvorschlags

- 110: Interpretieren von 201 und 210
- 111: Abgleich
- 112: Abspeichern

- 120: Validieren
- 120.1: Validierungsergebnis
- 121: Bestätigung
- 122: Auffinden von 2
- 123: Vergleich

- 200: Kochprozess
- 201: manuelle Benutzerinteraktion
- 201.1: Teilinteraktion
- 201.2: Teilinteraktion
- 202: Handlungssequenz
- 203: Rezept

- 210: Betriebsparameter
- 211: Referenzdatensatz
- 212: Validierungsdatensatz

## Patentansprüche

1. Verfahren (100) zur Digitalisierung eines Kochprozesses (200) bei einem Küchengerät (10) umfassend die folgenden Schritte:
- Erfassen (103) zumindest eines Betriebsparameters (210) des Küchengerätes (10) bei einer manuellen Benutzerinteraktion (201) zur Verarbeitung einer im Küchengerät (10) aufgenommenen Zutat (2),
- Identifizieren (104) der Zutat (2) durch Interpretieren (110) zumindest des Betriebsparameters (210) und der manuellen Benutzerinteraktion (201),
wobei die manuelle Benutzerinteraktion (201) einer Handlungssequenz (202) des Kochprozesses (200) zugeordnet wird, wobei die Interpretation (110) zum Identifizieren (104) der Zutat (2) auf Basis der Handlungssequenz (202) durchgeführt wird, wobei die Handlungssequenz (202) eine bestimmte Abfolge von Benutzerinteraktionen (201) umfasst.

2. Verfahren (100) nach Anspruch 1,
**dadurch gekennzeichnet,**
**dass** das Erfassen (103) des zumindest einen Betriebsparameters (210) ein Aufzeichnen eines zeitlichen Verlauf des zumindest einen Betriebsparameters (210) umfasst und/oder dass das Interpretieren (110) zum Identifizieren (104) der Zutat (2) einen Abgleich (111) zumindest des Betriebsparameters (210) und/oder der manuellen Benutzerinteraktion (201) mit einer Referenzdatenbank (33) umfasst.

3. Verfahren (100) nach einem der vorhergehenden Ansprüche,
**dadurch gekennzeichnet,**
**dass** mehrere Handlungssequenzen (202) abgespeichert werden und ein Rezept (203) bilden, insbesondere welches durch einen Benutzer nachträglich manuell bearbeitbar ist.

4. Verfahren (100) nach einem der vorhergehenden Ansprüche,
**dadurch gekennzeichnet,**
**dass** das Verfahren (100) folgenden Schritt umfasst:
- Senden (108) des Rezeptes (203) und/oder der Handlungssequenz (202) an ein mobiles Endgerät (3) und/oder einen Server (30), insbesondere wobei das Rezept (203) und/oder die Handlungssequenz (202) auf dem Server (30) aufbereitet wird.

5. Verfahren (100) nach einem der vorhergehenden Ansprüche,
**dadurch gekennzeichnet,**
**dass** das Verfahren (100) folgenden Schritt umfasst:
- Anzeigen (106) der erkannten Zutat (2) und/oder der Handlungssequenz (202) auf einer Anzeigeeinheit (13.1) des Küchengerätes (10), insbesondere wobei eine Bestätigung (121) der erkannten Zutat (2) durch den Benutzer erwartet wird.

6. Verfahren (100) nach einem der vorhergehenden Ansprüche,
**dadurch gekennzeichnet,**
**dass** vor dem Erfassen (103) des zumindest einen Betriebsparameters (210) eine Bestätigung (212) einer Hinzugabe der Zutat (2) durch den Benutzer erforderlich ist.

7. Verfahren (100) nach einem der vorhergehenden Ansprüche,
**dadurch gekennzeichnet,**
**dass** das Verfahren (100) folgenden Schritt umfasst:
- Validieren (120) der Zutat (2), der Handlungssequenz (202) und/oder des Rezeptes (203), insbesondere so dass eine kritische Handlungssequenz (202.1) erkennbar ist.

8. Verfahren (100) nach einem der vorhergehenden Ansprüche,
**dadurch gekennzeichnet,**
**dass** das Validieren (120) zumindest einen der folgenden Schritte umfasst:
- Auffinden (122) der Zutat (2) in einer Validierungsdatenbank (34),
- Vergleichen (123) des zumindest einen Betriebsparameters (210) und/oder der manuellen Benutzerinteraktion (201) mit einem Validierungsdatensatz (212), insbesondere wobei der Validierungsdatensatz (212) durch eine Big-Data-Analyse erzeugt wird.

9. Verfahren (100) nach einem der vorhergehenden Ansprüche,
**dadurch gekennzeichnet,**
**dass** das Verfahren folgenden Schritt umfasst:
- Ausgabe (109) eines Verbesserungsvorschlags in Abhängigkeit von Daten der Referenzdatenbank (33) und/oder der Validierungsdatenbank (34).

10. Küchengerät (10) zum Durchführen eines Kochprozesses (200) aufweisend
ein Kochgefäß (11) zur Aufnahme von Zutaten (2),
eine Bearbeitungsvorrichtung (12) zum Bearbeiten der Zutaten (2),
eine Benutzerschnittstelle (13) für eine manuelle Benutzerinteraktion (201) und
eine Sensorvorrichtung (20) zum Erfassen (103) zumindest eines Betriebsparameters (210) während des Kochprozesses (200),
**dadurch gekennzeichnet,**
**dass** die Benutzerschnittstelle (13) mit einem integrierten Steuergerät (14) verbunden ist, welches so ausgebildet ist,
**dass** ein Verfahren (100) nach einem der vorhergehenden Ansprüche durchführbar ist.

11. System (1) zur Digitalisierung eines Kochprozesses (200) aufweisend
ein Küchengerät (10), insbesondere nach Anspruch 10, zum Durchführen des Kochprozesses (200) mit einem Kochgefäß (11) zur Aufnahme von Zutaten (2) und einer Bearbeitungsvorrichtung (12) zum Bearbeiten der Zutaten (2), einer Benutzerschnittstelle (13) für eine manuelle Benutzerinteraktion (201), und
eine Sensorvorrichtung (20) zum Erfassen (103) zumindest eines Betriebsparameters (210) während des Kochprozesses (200),
**dadurch gekennzeichnet,**
**dass** eine Recheneinheit (31)^{ausgebildet zur Durchführung} eines Verfahrens nach einem der Ansprüche 1 bis 9 vorgesehen ist, durch welche eine Zutat (2) durch Interpretation (110) zumindest des Betriebsparameters (210) und der manuellen Benutzerinteraktion (201) identifizierbar ist.

12. System (1) nach Anspruch 11,
**dadurch gekennzeichnet,**
**dass** durch die Recheneinheit (31) auf eine Referenzdatenbank (33) zugreifbar und zur Interpretation (110) zumindest des Betriebsparameters (210) und/oder der manuellen Benutzerinteraktion (201) ein Abgleich (111) des zumindest einen Betriebsparameters (210) und/oder der manuellen Benutzerinteraktion (201) mit der Referenzdatenbank (33) durchführbar ist.

13. System (1) nach einem der Ansprüche 11 oder 12,
**dadurch gekennzeichnet,**
**dass** die Recheneinheit (31) mit einer Speichereinheit (32) in Kommunikationsverbindung steht, so dass die manuelle Benutzerinteraktion (201) und/oder der zumindest eine Betriebsparameter (210) in Korrelation zu der erkannten Zutat (2) in der Speichereinheit (32) abspeicherbar ist und/oder
**dass** durch die Recheneinheit (31) die manuelle Benutzerinteraktion (201) zumindest einer Handlungssequenz (202) des Kochprozesses (200) zuordbar sind.

14. System (1) nach einem der Ansprüche 11 bis 13,
**dadurch gekennzeichnet,**
**dass** die Sensorvorrichtung (20) zumindest einen der folgenden Sensoren zum Erfassen (103) des zumindest einen Betriebsparameters (210) aufweist:
- Waage (21), insbesondere mit drei Wägezellen (21.1),
- Stromsensor (22),
- Temperatursensor (23),
- Kamera (24).

15. System (1) nach einem der Ansprüche 11 bis 14,
**dadurch gekennzeichnet,**
**dass** die Sensorvorrichtung (20) einen Zeitmesser (25) umfasst, durch welchen ein zeitlicher Verlauf des zumindest einen Betriebsparameters (210) erstellbar ist und/oder dass ein Server (30) die Recheneinheit (31) aufweist und das Küchengerät (10) über eine Datenschnittstelle (15) mit dem Server (30) in Kommunikationsverbindung bringbar ist.

16. System (1) nach einem der Ansprüche 11 bis 15,
**dadurch gekennzeichnet,**
**dass** eine Anzeigeeinheit (13.1) vorgesehen ist, durch welche der Betriebsparameter (210) und/oder die erkannte Zutat (2) einem Benutzer anzeigbar ist.

17. System (1) nach einem der Ansprüche 11 bis 16,
**dadurch gekennzeichnet,**
**dass** die Recheneinheit (31) dazu ausgebildet ist, zur Durchführung einer Validierung (120) die Zutat (2) in einer Validierungsdatenbank (34) aufzufinden und/oder den zumindest einen Betriebsparameter (210) und/oder die manuelle Benutzerinteraktion (201) mit einem Validierungsdatensatz (212), der insbesondere durch eine Big-Data-Analyse erzeugt ist, zu vergleichen.

## Claims

1. A method (100) of digitizing a cooking process (200) in a kitchen appliance (10) comprising the following steps:
- Detecting (103) at least one operating parameter (210) of the kitchen appliance (10) during a manual user interaction (201) for processing an ingredient (2) received in the kitchen appliance (10),
- Identifying (104) the ingredient (2) by interpreting (110) at least the operating parameter (210) and the manual user interaction (201),
wherein the manual user interaction (201) is associated with an action sequence (202) of the cooking process (200), wherein interpreting (110) for identifying (104) the ingredient (2) is performed based on the action sequence (202), wherein the action sequence (202) comprises a specific sequence of user interactions (201).

2. The method (100) according to claim 1,
**characterized in that**
detecting (103) of the at least one operating parameter (210) comprises recording a time history of the at least one operating parameter (210) and/or
interpreting (110) for identifying (104) the ingredient (2) comprises a comparison (111) of at least the operating parameter (210) and/or the manual user interaction (201) with a reference database (33).

3. The method (100) according to any one of the preceding claims,
**characterized in that**
several action sequences (202) are stored and form a recipe (203), in particular which can be subsequently edited manually by a user.

4. The method (100) according to any one of the preceding claims,
**characterized in that**
the method (100) comprises the following step:
- Sending (108) the recipe (203) and/or the sequence of actions (202) to a mobile terminal (3) and/or a server (30), in particular wherein the recipe (203) and/or the sequence of actions (202) is processed on the server (30).

5. The method (100) according to any one of the preceding claims,
**characterized in that**
the method (100) comprises the following step:
- Display (106) of the recognized ingredient (2) and/or the sequence of actions (202) on a display unit (13.1) of the kitchen appliance (10), in particular wherein a confirmation (121) of the recognized ingredient (2) by the user is expected.

6. The method (100) according to any one of the preceding claims,
**characterized in that**
a confirmation (212) of an addition of the ingredient (2) by the user is required prior to the detection (103) of the at least one operating parameter (210).

7. The method (100) according to any one of the preceding claims,
**characterized in that**
the method (100) comprises the following step:
- Validating (120) the ingredient (2), the sequence of actions (202) and/or the recipe (203), in particular so that a critical sequence of actions (202.1) is recognizable.

8. The method (100) according to any one of the preceding claims,
**characterized in that**
the validating (120) comprises at least one of the following steps:
- Locating (122) the ingredient (2) in a validation database (34),
- Comparing (123) the at least one operating parameter (210) and/or the manual user interaction (201) with a validation data set (212), in particular wherein the validation data set (212) is generated by big data analysis.

9. The method (100) according to any one of the preceding claims,
**characterized in that**
the method comprises the following step:
- Output (109) of an improvement suggestion depending on data from the reference database (33) and/or the validation database (34).

10. Kitchen appliance (10) for carrying out a cooking process (200), comprising
a cooking vessel (11) for holding ingredients (2),
a processing device (12) for processing the ingredients (2),
a user interface (13) for manual user interaction (201) and
a sensor device (20) for detecting (103) at least one operating parameter (210) during the cooking process (200),
**characterized in that**
the user interface (13) is connected to an integrated control unit (14), which is designed in such a way that a method (100) according to one of the preceding claims can be carried out.

11. System (1) for digitizing a cooking process (200) comprising
a kitchen appliance (10), in particular according to claim 10, for carrying out the cooking process (200) with a cooking vessel (11) for holding ingredients (2) and a processing device (12) for processing the ingredients (2), a user interface (13) for manual user interaction (201), and
a sensor device (20) for detecting (103) at least one operating parameter (210) during the cooking process (200),
**characterized in that**
a computing unit (31) is provided which is designed to carry out a method according to one of claims 1 to 9, by means of which an ingredient (2) can be identified by interpreting (110) at least the operating parameter (210) and the manual user interaction (201).

12. System (1) according to claim 11,
**characterized in that**
a reference database (33) can be accessed by the computing unit (31) and a comparison (111) of the at least one operating parameter (210) and/or the manual user interaction (201) with the reference database (33) can be carried out for the purpose of interpreting (110) at least the operating parameter (210) and/or the manual user interaction (201).

13. System (1) according to any one of claims 11 or 12,
**characterized in that**
the computing unit (31) is in communication with a memory unit (32), so that the manual user interaction (201) and/or the at least one operating parameter (210) can be stored in the memory unit (32) in correlation with the recognized ingredient (2), and/or
the manual user interaction (201) can be assigned to at least one action sequence (202) of the cooking process (200) by the computing unit (31).

14. System (1) according to any one of claims 11 to 13,
**characterized in that**
the sensor device (20) has at least one of the following sensors for detecting (103) the at least one operating parameter (210):
- Scale (21), in particular with three load cells (21.1),
- Current sensor (22),
- Temperature sensor (23),
- Camera (24).

15. System (1) according to any one of claims 11 to 14,
**characterized in that**
the sensor device (20) comprises a timer (25), by means of which a time history of the at least one operating parameter (210) can be produced and/or
a server (30) has the computing unit (31) and the kitchen appliance (10) can be brought into communication with the server (30) via a data interface (15).

16. System (1) according to any one of claims 11 to 15,
**characterized in that**
a display unit (13.1) is provided, by means of which the operating parameter (210) and/or the recognized ingredient (2) can be displayed to a user.

17. System (1) according to any one of claims 11 to 16,
**characterized in that**
the computing unit (31) is designed to locate the ingredient (2) in a validation database (34) and/or to compare the at least one operating parameter (210) and/or the manual user interaction (201) with a validation data set (212), which is generated in particular by a big data analysis, in order to perform a validation (120).

## Revendications

1. Procédé (100) de numérisation d'un processus de cuisson (200) dans un appareil de cuisine (10), comprenant les étapes suivantes :
- La détection (103) d'au moins un paramètre de fonctionnement (210) de l'appareil de cuisine (10) lors d'une interaction manuelle de l'utilisateur (201) pour traiter un ingrédient (2) reçu dans l'appareil de cuisine (10),
- Identifier (104) l'ingrédient (2) en interprétant (110) au moins le paramètre de fonctionnement (210) et l'interaction manuelle de l'utilisateur (201),
l'interaction manuelle de l'utilisateur (201) étant associée à une séquence d'actions (202) du processus de cuisson (200), l'interprétation (110) pour identifier (104) l'ingrédient (2) étant effectuée sur la base de la séquence d'actions (202), la séquence d'actions (202) comprenant une certaine séquence d'interactions d'utilisateur (201).

2. Procédé (100) selon la revendication 1,
**caractérisé en ce que**
la détection (103) de l'au moins un paramètre de fonctionnement (210) comprend un enregistrement d'une évolution dans le temps de l'au moins un paramètre de fonctionnement (210) et/ou
**en ce que** l'interprétation (110) pour identifier (104) l'ingrédient (2) comprend une comparaison (111) d'au moins le paramètre de fonctionnement (210) et/ou l'interaction manuelle de l'utilisateur (201) avec une base de données de référence (33).

3. Procédé (100) selon l'une quelconque des revendications précédentes,
**caractérisé en ce que**
plusieurs séquences d'action (202) sont mémorisées et forment une recette (203), en particulier qui peut être traitée manuellement ultérieurement par un utilisateur.

4. Procédé (100) selon l'une quelconque des revendications précédentes,
**caractérisé en ce que**
le procédé (100) comprend l'étape suivante :
- L'envoi (108) de la recette (203) et/ou de la séquence d'actions (202) à un terminal mobile (3) et/ou à un serveur (30), en particulier dans lequel la recette (203) et/ou la séquence d'actions (202) est préparée sur le serveur (30).

5. Procédé (100) selon l'une quelconque des revendications précédentes,
**caractérisé en ce que**
le procédé (100) comprend l'étape suivante :
- Affichage (106) de l'ingrédient (2) reconnu et/ou de la séquence d'actions (202) sur une unité d'affichage (13.1) de l'appareil de cuisine (10), en particulier une confirmation (121) de l'ingrédient (2) reconnu étant attendue par l'utilisateur.

6. Procédé (100) selon l'une quelconque des revendications précédentes,
**caractérisé en ce qu'**
une confirmation (212) d'une addition de l'ingrédient (2) par l'utilisateur est nécessaire avant la détection (103) de l'au moins un paramètre de fonctionnement (210).

7. Procédé (100) selon l'une quelconque des revendications précédentes,
**caractérisé en ce que**
le procédé (100) comprend l'étape suivante :
- Valider (120) l'ingrédient (2), la séquence d'actions (202) et/ou la recette (203), en particulier de telle sorte qu'une séquence d'actions critique (202.1) soit reconnaissable.

8. Procédé (100) selon l'une quelconque des revendications précédentes,
**caractérisé en ce que**
la validation (120) comprend au moins l'une des étapes suivantes :
- rechercher (122) de l'ingrédient (2) dans une base de données de validation (34),
- comparer (123) le au moins un paramètre de fonctionnement (210) et/ou l'interaction manuelle de l'utilisateur (201) à un ensemble de données de validation (212), en particulier dans lequel l'ensemble de données de validation (212) est généré par une analyse de données volumineuses.

9. Procédé (100) selon l'une quelconque des revendications précédentes,
**caractérisé en ce que**
le procédé comprend l'étape suivante :
- Sortie (109) d'une proposition d'amélioration en fonction des données de la base de données de référence (33) et/ou de la base de données de validation (34).

10. Appareil de cuisine (10) pour réaliser un processus de cuisson (200), comprenant
un récipient de cuisson (11) destiné à recevoir des ingrédients (2),
un dispositif de traitement (12) pour traiter les ingrédients (2),
une interface utilisateur (13) pour une interaction manuelle de l'utilisateur (201) ; et un dispositif de détection (20) pour détecter (103) au moins un paramètre de fonctionnement (210) pendant le processus de cuisson (200),
**caractérisé en ce que**
l'interface utilisateur (13) est reliée à un appareil de commande intégré (14) qui est conçu de telle sorte qu'un procédé (100) selon l'une des revendications précédentes puisse être mis en oeuvre.

11. Système (1) de numérisation d'un processus de cuisson (200), comprenant
un appareil de cuisine (10), en particulier selon la revendication 10, pour réaliser le processus de cuisson (200) avec un récipient de cuisson (11) pour recevoir des ingrédients (2) et un dispositif de traitement (12) pour traiter les ingrédients (2), une interface utilisateur (13) pour une interaction manuelle de l'utilisateur (201), et
un dispositif de détection (20) pour détecter (103) au moins un paramètre de fonctionnement (210) pendant le processus de cuisson (200),
**caractérisé en ce qu'**
il est prévu une unité de calcul (31) conçue pour mettre en oeuvre un procédé selon l'une des revendications 1 à 9, par laquelle un ingrédient (2) peut être identifié par interprétation (110) au moins du paramètre de fonctionnement (210) et de l'interaction manuelle de l'utilisateur (201).

12. Système (1) selon la revendication 11,
**caractérisé en ce que**
l'unité de calcul (31) permet d'accéder à une base de données de référence (33) et, pour l'interprétation (110) d'au moins le paramètre de fonctionnement (210) et/ou l'interaction manuelle de l'utilisateur (201), une comparaison (111) d'au moins un paramètre de fonctionnement (210) et/ou de l'interaction manuelle de l'utilisateur (201) avec la base de données de référence (33) peut être effectuée.

13. Système (1) selon l'une des revendications 11 ou 12,
**caractérisé en ce que**
l'unité de calcul (31) est en liaison de communication avec une unité de mémoire (32), de sorte que l'interaction manuelle de l'utilisateur (201) et/ou le au moins un paramètre de fonctionnement (210) peut être mémorisé dans l'unité de mémoire (32) en corrélation avec l'ingrédient reconnu (2) et/ou
**en ce que** l'unité de calcul (31) permet d'associer l'interaction manuelle de l'utilisateur (201) à au moins une séquence d'action (202) du processus de cuisson (200).

14. Système (1) selon l'une quelconque des revendications 11 à 13,
**caractérisé en ce que**
le dispositif de détection (20) présente au moins l'un des capteurs suivants pour détecter (103) l'au moins un paramètre de fonctionnement (210) :
- Balance (21), en particulier avec trois cellules de pesage (21.1),
- Capteur de courant (22),
- Capteur de température (23),
- Caméra (24).

15. Système (1) selon l'une quelconque des revendications 11 à 14,
**caractérisé en ce que**
le dispositif capteur (20) comprend un chronomètre (25) qui permet d'établir une courbe temporelle de l'au moins un paramètre de fonctionnement (210) et/ou
un serveur (30) présente l'unité de calcul (31) et l'appareil de cuisine (10) peut être mis en liaison de communication avec le serveur (30) par une interface de données (15).

16. Système (1) selon l'une quelconque des revendications 11 à 15,
**caractérisé en ce qu'**
il est prévu une unité d'affichage (13.1) par laquelle le paramètre de fonctionnement (210) et/ou l'ingrédient (2) reconnu peut être affiché à un utilisateur.

17. Système (1) selon l'une quelconque des revendications 11 à 16,
**caractérisé en ce que**
l'unité de calcul (31) est conçue pour trouver l'ingrédient (2) dans une base de données de validation (34) pour effectuer une validation (120) et/ou pour comparer l'au moins un paramètre de fonctionnement (210) et/ou l'interaction manuelle de l'utilisateur (201) avec un jeu de données de validation (212), qui est notamment généré par une analyse Big Data.
